# EUROPEAN PATENT APPLICATION

(11) **EP 4 054 181 A1**
(43) Date of publication of application: **07.09.2022**
(21) Application number: 22159485.6
(22) Date of filing: 01.03.2022
(51) Int. Cl.: H04N 7/15

(54) **VIRTUAL SPACE SHARING SYSTEM, VIRTUAL SPACE SHARING METHOD, AND VIRTUAL SPACE SHARING PROGRAM**

(30) Priority: 01.03.2021 JP 2021031616
(71) Applicant: TOYOTA JIDOSHA KABUSHIKI KAISHA, Toyota-shi, Aichi-ken, 471-8571 (JP)
(72) Inventor: FUNAZUKURI, Mina, Toyota-shi, 471-8571 (JP); WATANABE, Narimasa, Toyota-shi, 471-8571 (JP); HORI, Tatsuro, Toyota-shi, 471-8571 (JP); KAKU, Wataru, Toyota-shi, 471-8571 (JP)
(74) Representative: D Young & Co LLP

(57) **Abstract**

The present disclosure provides a virtual space sharing system capable of outputting a virtual image in which a plurality of users share a virtual space between the plurality of users in a two-way direction. A first exemplary aspect is a virtual space sharing system (1) includes: a motion acquisition unit (2) configured to acquire a motion of a user present in each of a plurality of spaces (S); an image generation unit (9) configured to generate a virtual image in which avatars corresponding to the respective users operate in a virtual space shared in the plurality of spaces (S) based on the motions of the respective users; and an output unit (10) configured to output a virtual image in which avatars of other users operate in the virtual space to a display unit (15) disposed in each of the plurality of spaces (S).

## Description

### BACKGROUND

The present disclosure relates to a virtual space sharing system, a virtual space sharing method, and a virtual space sharing program.

In recent years, a technology for operating an avatar corresponding to a user in a virtual space has been practically used for moving image distribution and the like. In such a moving image distribution system, for example, as disclosed in Japanese Unexamined Patent Application Publication No. 2019-204244, a virtual image in which an avatar corresponding to a user operates in a virtual space is simultaneously distributed to a plurality of viewing users.

### SUMMARY

The applicant has however found the following problem. The moving image distribution system disclosed in Japanese Unexamined Patent Application Publication No. 2019-204244 is a one-way distribution system that distributes a virtual image to a viewing user. Therefore, the moving image distribution system disclosed in Japanese Unexamined Patent Application Publication No. 2019-204244 is not configured so that a virtual image in which a plurality of users share a virtual space can be distributed (output) between the plurality of users in a two-way direction.

The present disclosure provides a virtual space sharing system, a virtual space sharing method, and a virtual space sharing program that are capable of outputting a virtual image in which a plurality of users share a virtual space between the plurality of users in a two-way direction.

A first exemplary aspect is a virtual space sharing system including:
a motion acquisition unit configured to acquire a motion of a user present in each of a plurality of spaces;
an image generation unit configured to generate a virtual image in which avatars corresponding to the respective users operate in a virtual space shared in the plurality of spaces based on the motions of the respective users; and
an output unit configured to output a virtual image in which avatars of other users operate in the virtual space to a display unit disposed in each of the plurality of spaces.

The above-described virtual space sharing system may further include a space setting unit configured to set the virtual space based on a space request input from outside,
in which initial positions where the avatars of the other users are placed in the virtual space may be determined in accordance with the virtual space.

The above-described virtual space sharing system may further include a placement setting unit configured to set placement of the avatars of the other users for the respective initial positions determined in the virtual space based on a placement request of the avatar input from the outside.

The above-described virtual space sharing system may further include:
a line-of-sight acquisition unit configured to acquire a line-of-sight direction of the user; and
a point of interest acquisition unit configured to acquire a point of interest of the user in the virtual image based on the line-of-sight direction of the user,
in which the image generation unit may generate the virtual image based on the point of interest of the user in the virtual image.

The above-described virtual space sharing system may further include a voice acquisition unit configured to acquire a voice of the user,
in which when the virtual space is a presentation space, the image generation unit may generate the virtual image so that an avatar of a user who makes a presentation by using a material incorporated in the presentation space and the material do not interfere with the avatars of the other users and that the user who makes the presentation and the material are displayed in a size larger than those of the avatars of the other users.

The above-described virtual space sharing system may further include a voice acquisition unit configured to acquire a voice of the user,
in which when the virtual space is a meeting space, the image generation unit may generate the virtual image so that the avatars of the other users are placed side by side in the meeting space.

The above-described virtual space sharing system may further include:
a line-of-sight acquisition unit configured to acquire a line-of-sight direction of the user; and
a point of interest acquisition unit configured to acquire a point of interest of the user in the virtual image based on the line-of-sight direction of the user,
in which the image generation unit may generate the virtual image based on the point of interest of the user in the virtual image so that the avatars of the other users having a conversation with each other face each other in the meeting space.

In the above-described virtual space sharing system, the image generation unit may generate the virtual image within a preset field-of-view range in a field-of-view direction of the avatar of the user in the virtual space.

Another exemplary aspect is a virtual space sharing method including:
acquiring in time series a motion of a user present in each of a plurality of spaces;
generating a virtual image in which avatars corresponding to the respective users operate in a virtual space shared in the plurality of spaces based on the time-series motions of the respective users; and
outputting a virtual image in which avatars of other users operate in the virtual space to a display unit disposed in each of the plurality of spaces.

Another exemplary aspect is a virtual space sharing program for causing a computer to:
acquire in time series a motion of a user present in each of a plurality of spaces;
generate a virtual image in which avatars corresponding to the respective users operate in a virtual space shared in the plurality of spaces based on the time-series motions of the respective users; and
output a virtual image in which avatars of other users operate in the virtual space to a display unit disposed in each of the plurality of spaces.

According to the present disclosure, it is possible to provide a virtual space sharing system, a virtual space sharing method, and a virtual space sharing program that are capable of outputting a virtual image in which a plurality of users share a virtual space between the plurality of users in a two-way direction.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a block diagram showing a virtual space sharing system and a peripheral configuration according to a first embodiment;
Fig. 2 is a diagram showing a state of a first space when a meeting is held using the virtual space sharing system according to the first embodiment;
Fig. 3 is a diagram showing a state of a second space when a meeting is held using the virtual space sharing system according to the first embodiment;
Fig. 4 is a diagram showing a state of a third space when a meeting is held using the virtual space sharing system according to the first embodiment;
Fig. 5 is a diagram showing a state of a fourth space when a meeting is held using the virtual space sharing system according to the first embodiment;
Fig. 6 is a diagram showing a state of the first space when a meeting is held using a virtual space sharing system according to a second embodiment;
Fig. 7 is a diagram showing a state of the second space when a meeting is held using the virtual space sharing system according to the second embodiment;
Fig. 8 is a diagram showing a space in which a user who makes a presentation is present when the presentation is made using a virtual space sharing system according to a third embodiment;
Fig. 9 is a diagram showing a space in which a user who listens to a presentation by using the virtual space sharing system according to the third embodiment is present;
Fig. 10 is a diagram showing a state of a space when a virtual space is changed to a meeting space during a presentation;
Fig. 11 is a diagram showing a state of a space where a teacher is present when a dance lesson is performed using a virtual space sharing system according to a fourth embodiment;
Fig. 12 is a diagram showing a state of a space where students are present when a dance lesson is performed using the virtual space sharing system according to the fourth embodiment;
Fig. 13 is a diagram showing a state of a space where a first user is present when the first user approaches the second user and speaks to the second user;
Fig. 14 is a diagram showing a state of a space where a third user is present when the first user approaches the second user and speaks to the second user;
Fig. 15 is a diagram showing a state of a space where the first user is present when the second user approaches the first user who has spoken to the second user and speaks to the first user;
Fig. 16 is a diagram showing a state of a space where the third user is present when the second user approaches the first user who has spoken to the second user and speaks to the first user; and
Fig. 17 is a diagram showing an example of a hardware configuration included in the virtual space sharing system.

### DESCRIPTION OF EMBODIMENTS

Specific embodiments to which the present disclosure is applied will be described hereinafter in detail with reference to the drawings. However, the present disclosure is not limited to the embodiments shown below. Further, for the clarification of the description, the following descriptions and the drawings are simplified as appropriate.

### <First Embodiment>

First, a configuration of a virtual space sharing system according to this embodiment will be described. The virtual space sharing system according to this embodiment is suitable for a user present in each of a plurality of spaces to perform communication in a common virtual space by using an avatar corresponding to the user. Note that the space may be any space where a user is present who communicates with other users using a virtual space sharing system of a living room in a house, an office, a studio, or the like.

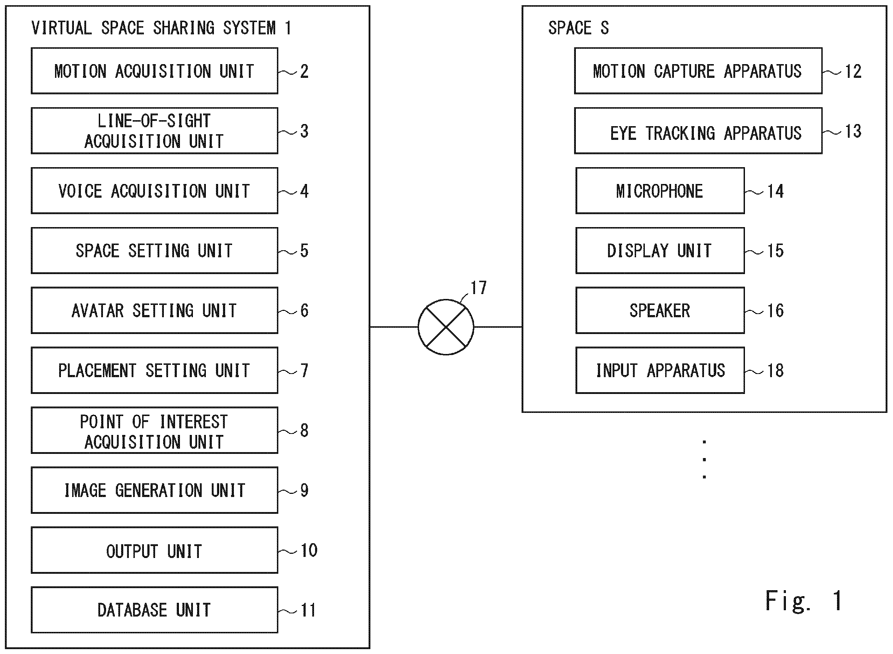

Fig. 1 is a block diagram showing a virtual space sharing system and a peripheral configuration according to this embodiment. As shown in Fig. 1, a virtual space sharing system 1 includes a motion acquisition unit 2, a line-of-sight acquisition unit 3, a voice acquisition unit 4, a space setting unit 5, an avatar setting unit 6, a placement setting unit 7, a point of interest acquisition unit 8, an image generation unit 9, an output unit 10, and a database unit 11.

Further, the virtual space sharing system 1 is connected to a motion capture apparatus 12, an eye tracking apparatus 13, a microphone 14, a display unit 15, and a speaker 16 disposed in each of a plurality of spaces S via a network 17. Further, the virtual space sharing system 1 is connected to an input apparatus 18 such as a mobile terminal owned by a user present in each space via the network 17.

The motion acquisition unit 2 acquires a motion of a user present in each of the plurality of spaces S. For example, the motion acquisition unit 2 acquires a motion of a user from the motion capture apparatus 12 disposed in each space S.

Specifically, the motion capture apparatus 12 is disposed in each space S so that it can detect a motion of a user in each space S, and includes an RGBD camera such as kinect. Further, the motion capture apparatus 12 detects skeletal coordinates of a user in time series as a motion of the user, and outputs information indicating the detected skeletal coordinates of the user in time series to the motion acquisition unit 2 via the network 17.

By the above configuration, the motion acquisition unit 2 can acquire a time-series change of the posture of a user, the direction of the face of the user, the position of the user, and the like based on the time-series skeletal coordinates of the user indicated by the information input from the motion capture apparatus 12 of each space S. Note that the skeletal coordinates of a user can be acquired, for example, by the world coordinates in the space S.

However, the motion acquisition unit 2 may be composed of a motion capture apparatus disposed in each space S. That is, the motion acquisition unit 2 itself may acquire a motion of a user, or may acquire a motion of a user from an external motion capture apparatus. In short, the motion acquisition unit 2 may be any means that can acquire a motion of a user.

The line-of-sight acquisition unit 3 acquires a line-of-sight direction of a user present in each space S. For example, the line-of-sight acquisition unit 3 acquires a line-of-sight direction of a user from the eye tracking apparatus 13 disposed in each space S.

Specifically, the eye tracking apparatus 13 is disposed in each space S so that it can detects a line-of-sight direction of a user in the space S. The eye tracking apparatus 13 includes, for example, an infrared light source and an infrared camera, and detects a line-of-sight direction of a user in time series based on a positional relation between the center of the pupil and the Purkinje image.

The eye tracking apparatus 13 outputs information indicating the detected time-series line-of-sight direction of the user to the line-of-sight acquisition unit 3 via the network 17. By the above configuration, the line-of-sight acquisition unit 3 can acquire the line-of-sight direction of a user. Note that the line-of-sight direction of a user can be acquired, for example, by the world coordinates in the space S.

However, the line-of-sight acquisition unit 3 may be composed of an eye tracking apparatus disposed in each space S. That is, the line-of-sight acquisition unit 3 itself may acquire a line-of-sight direction of a user, or may acquire a line-of-sight direction of a user from an external eye tracking apparatus. Further, when a line-of-sight direction of a user can be detected by the motion capture apparatus 12, the eye tracking apparatus 13 may be composed of the motion capture apparatus 12. In short, the line-of-sight acquisition unit 3 may be any means that can acquire a line-of-sight direction of a user.

The voice acquisition unit 4 acquires a voice of a user present in each space S. For example, the voice acquisition unit 4 acquires a voice of a user from the microphone 14 disposed in each space S. Specifically, the microphone 14 is disposed in each space S so that it can detect a voice of a user, and outputs information indicating the detected voice of the user to the voice acquisition unit 4 via the network 17.

By the above configuration, the voice acquisition unit 4 can acquire a voice of a user. Note that the voice acquisition unit 4 may acquire, based on the voice of the user detected by the microphone 14, a direction of the voice.

However, the voice acquisition unit 4 may be composed of a microphone disposed in each space S. That is, the voice acquisition unit 4 itself may acquire a voice of a user, or may acquire a voice of a user from an external microphone. In short, the voice acquisition unit 4 may be any means that can acquire a voice of a user.

The space setting unit 5 sets a virtual space shared in the plurality of spaces S based on a space request input from the outside. As the virtual space, for example, a meeting space, a presentation space, or an office space may be prepared. The virtual space may be either two-dimensional or three-dimensional, and has coordinates in the virtual space.

The space setting unit 5 displays, for example, a selection image prompting a user to make a selection from among a plurality of virtual space candidates on a display unit of the input apparatus 18 owned by the user. Then at least one user selects the virtual space candidate to be displayed on the display unit of his/her input apparatus 18, to thereby input information indicating the space request to the space setting unit 5. The space setting unit 5 sets a virtual space based on the space request indicated by the input information.

However, any means by which a user inputs a space request may be employed as long as information indicating a space request input by a user can be input to the space setting unit 5. Further, information indicating a space request may be input to the space setting unit 5 from the outside, and for example, the space request may be input not only by a user but also by another person through an input apparatus. Further, when the number of types of the virtual space is limited to one in advance, the space setting unit 5 may be omitted.

The avatar setting unit 6 sets an avatar corresponding to a user to be appeared in the virtual space based on an avatar setting request input from the outside. The avatar operates in the virtual space so that it corresponds to the motion of a user acquired by the motion acquisition unit 2. Details of this operation will be described later.

As avatars, for example, a Computer Graphics (CG) character, a CG character in which a face image of a user acquired by the motion acquisition unit 2 or acquired in advance is fitted into a face part, and a dress-up character in which clothes and the like of the image of the user acquired by the motion acquisition unit 2 have been changed may be prepared. In this case, the avatar may be either two-dimensional or three-dimensional, and has coordinates in the virtual space. However, the aforementioned avatars are merely examples, and the avatar may be any avatar that operates in the virtual space so that it corresponds to the motion of the user.

For example, the avatar setting unit 6 displays an image prompting a user to make a selection from among a plurality of character candidates or to set details of the selected character on the display unit of the input apparatus 18 owned by the user. Details of this operation will be described later. Then, the user selects a character candidate displayed on the display unit of his/her input apparatus 18, to thereby input information indicating an avatar setting request to the avatar setting unit 6.

The avatar setting unit 6 sets an avatar corresponding to the user based on the avatar setting request indicated by the input information. However, any means by which a user inputs an avatar setting request may be employed as long as information indicating an avatar setting request input by a user can be input to the avatar setting unit 6.

Further, information indicating an avatar setting request may be input to the avatar setting unit 6 from the outside, and for example, the avatar setting request may be input not only by a user but also by another person through an input apparatus. Further, when an avatar corresponding to a user has been assigned in advance, the avatar setting unit 6 can be omitted.

As will be described later, the placement setting unit 7 sets initial positions of avatars in the virtual space generated by the image generation unit 9 based on a placement request of avatars input from the outside. Note that initial positions where avatars of other users are placed in the virtual space are determined in advance in accordance with the virtual space. Details of this operation will be described later.

The placement setting unit 7 displays, for example, a selection image prompting a user to make a selection from among placement position candidates on the display unit of the input apparatus 18 owned by the user. Then, a user selects a placement position candidate displayed on the display unit of his/her input apparatus 18 for each avatar of other users, to thereby input information indicating a placement request to the placement setting unit 7.

The placement setting unit 7 sets an initial position of each avatar of the other users in the virtual space based on the placement request indicated by the input information. However, any means by which a user inputs a placement request of avatars of other users may be employed as long as information indicating a placement request for each avatar of the other users input by a user can be input to the placement setting unit 7.

Further, information indicating an avatar setting request may be input to the placement setting unit 7 from the outside, and for example, the avatar setting request may be input not only by a user but also by another person through an input apparatus. Further, when there is one other user who performs communication or when initial positions of avatars of other users have been set in advance, the placement setting unit 7 may be omitted.

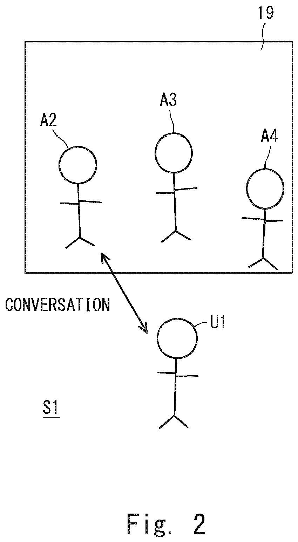

The point of interest acquisition unit 8 acquires a point of interest of a user in the virtual image projected from the display unit 15 disposed in the space S where the user is present onto a screen 19 (see Fig. 2) based on the line-of-sight line direction of the user indicated by the information acquired by the line-of-sight acquisition unit 3.

Specifically, the display unit 15 is an apparatus capable of projecting an image, such as a display and a projector. For example, when the display unit 15 is a projector and the virtual image generated by the image generation unit 9 is projected onto a wall surface of the space S, the wall surface of the space S is configured as the screen 19.

At this time, the coordinates in the virtual image in a state where the virtual image is projected onto the screen 19 and the coordinates in the virtual image in a state where the virtual image is generated by the image generation unit 9 are associated with each other. Note that the coordinates in the virtual image in a state where the virtual image is projected onto the screen 19 can be acquired by the world coordinates in the space S based on, for example, a positional relation between the display unit 15 and the screen 19.

The coordinates in the virtual image in a state where the virtual image is generated by the image generation unit 9 are set for each pixel. Thus, based on the positional relation between the display unit 15 and the screen 19, an area of the screen 19 corresponding to each pixel can be acquired. Further, based on the skeletal coordinates of a user, the coordinates (e.g., the standing position of the user and the eye position of the user in the space S) of the user in the space S can be acquired.

Therefore, the point of interest acquisition unit 8 can acquire the point of interest of the user in the virtual image based on the coordinates of the user, the line-of-sight direction of the user, and the area of the screen 19 corresponding to each pixel. At this time, when the point of interest acquisition unit 8 further refers to the direction of the face of the user, the point of interest acquisition unit 8 can accurately acquire the point of interest of the user in the virtual image.

The image generation unit 9 generates a virtual image in which the avatars of the respective users operate in the virtual space in accordance with the motions of the respective users. At this time, the image generation unit 9 generates a virtual image for each user in which the avatars of all the users share one virtual space and the avatars of other users in the virtual space operate from a state where they are placed at their initial positions based on the set virtual space, the set avatar of a user, the set initial positions of the avatars of the other users in the virtual space, the motion of each user, and the point of interest of each user in the virtual image. Details of this operation will be described later.

Here, the image generation unit 9 generates a virtual image in which an avatar in the virtual space moves forward or backward when a user moves forward or backward with respect to the screen 19 in the space S, and the avatar in the virtual space moves left and right when the user moves left and right with respect to the screen 19. Further, the image generation unit 9 generates, for example, a virtual image in which the hands and feet of the avatar in the virtual space operate so that they correspond to the motions of the hands and feet of the user.

Note that "sharing a virtual space" includes not only a case in which a virtual space is shared together with a positional relation between avatars in the virtual space, but also a state in which the positional relation between the avatars in the virtual space is corrected. That is, "sharing a virtual space" includes not only a case in which one virtual space is shared but also a case in which a situation as a virtual space is shared.

The output unit 10 outputs information indicating a virtual image for each user generated by the image generation unit 9 to the display unit 15 of each space S via the network 17, and outputs information indicating a voice of each user acquired by the voice acquisition unit 4 to the speaker 16 of each space S via the network 17.

The database unit 11 stores information indicating virtual space candidates, information indicating placement position candidates of avatars of other users in the virtual space, information for a plurality of character candidates and detailed setting of each character, a positional relation between the display unit 15 and the screen 19, and the like.

Next, a flow of holding a meeting using the virtual space sharing system 1 according to this embodiment will be described. First, a flow in which a user sets a meeting space, an initial position of an avatar, and initial positions of avatars of other users will be described.

In this embodiment, an example of a case will be described in which a first user present in a first space, a second user present in a second space, a third user present in a third space, and a fourth user present in a fourth space hold a meeting in a common meeting space.

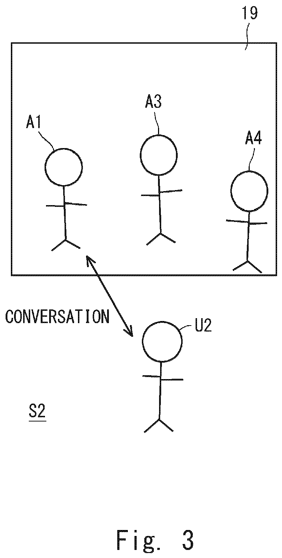

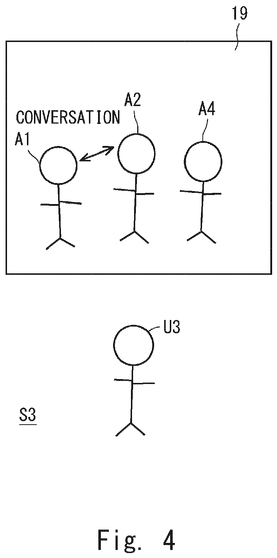

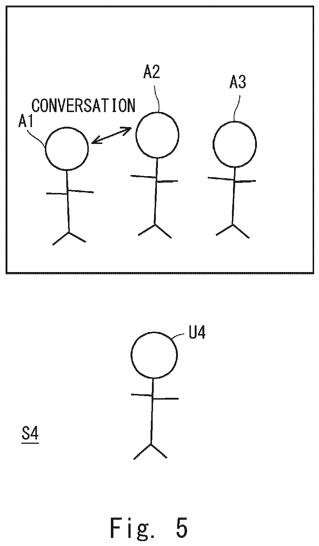

Fig. 2 is a diagram showing a state of the first space when a meeting is held using the virtual space sharing system according to this embodiment. Fig. 3 is a diagram showing a state of the second space when a meeting is held using the virtual space sharing system according to this embodiment. Fig. 4 is a diagram showing a state of the third space when a meeting is held using the virtual space sharing system according to this embodiment. Fig. 5 is a diagram showing a state of the fourth space when a meeting is held using the virtual space sharing system according to this embodiment.

First, the input apparatuses 18 respectively owned by a first user U1, a second user U2, a third user U3, and a fourth user U4 are connected to the virtual space sharing system 1, and information indicating virtual space candidates is acquired by the input apparatuses 18.

Then the first user U1, the second user U2, the third user U3, and the fourth user U4 select respective meeting spaces from among a plurality of virtual space candidates via the respective input apparatuses 18. By the above, the space setting unit 5 sets a virtual space for the meeting space.

However, for example, the representative user may set the virtual space and set other users who attend the meeting, so that the respective users U1, U2, U3, and U4 can share the meeting space even when the respective users U1, U2, U3, and U4 do not set the virtual space.

Next, the input apparatuses 18 respectively owned by the first user U1, the second user U2, the third user U3 and the fourth user U4 are connected to the virtual space sharing system 1, and information for setting avatars is acquired by the input apparatuses 18. Then the first user U1, the second user U2, the third user U3, and the fourth user U4 select respective desired characters from among a plurality of character candidates via the respective input apparatuses 18.

For example, the first user U1, the second user U2, the third user U3, and the fourth user U4 select one of the following character candidates via the input apparatus 18: a CG character; a CG character in which the face image of a user acquired by the motion acquisition unit 2 is fitted into a face part; and a dress-up character in which clothes and the like of the image of a user acquired by the motion acquisition unit 2 have been changed. By the above, the avatar setting unit 6 acquires the selected characters.

Then, the avatar setting unit 6 displays an image prompting a user to set details for each selected character on the display unit of the input apparatus 18. Specifically, for example, when a CG character is selected, a plurality of types of CG characters are displayed as candidate images. When a CG character in which a face image of a user is fitted into a face part is selected, a plurality of types of CG characters in which the face image of the user is fitted into a face part are displayed as candidate images. When a dress-up character is selected, a plurality of types of clothes and decorations are displayed as selection images.

The first user U1, the second user U2, the third user U3 and the fourth user U4 select respective candidate images via the respective input apparatuses 18 and complete respective desired avatars. By the above, the avatar setting unit 6 sets avatars A1, A2, A3, and A4 corresponding to the respective users U1, U2, U3, and U4.

At this time, the avatars A1, A2, A3, and A4 of the respective users U1, U2, U3, and U4 may be stored in the database unit 11 so that the completed avatars can be used again at the time of the next meeting or the like using the virtual space sharing system 1.

By the above, it is possible for a user to omit the setting of the avatar again by calling the avatar stored in the database unit 11 at the time of the next meeting or the like using the virtual space sharing system 1.

Note that a general means can be used for a technique for fitting a face image of a user acquired by the motion acquisition unit 2 into a face part of the CG character and a technique for changing clothes or the like of an image of a user acquired by the motion acquisition unit 2. At this time, an avatar may be formed so that it corresponds to the balance between the body and the head of a user based on the image acquired by the motion acquisition unit 2 or acquired in advance.

Next, the input apparatuses 18 respectively owned by the first user U1, the second user U2, the third user U3, and the fourth user U4 are connected to the virtual space sharing system 1, and information indicating placement position candidates of avatars of other users in the selected meeting space is acquired by the input apparatus 18.

For example, when a meeting space is set as a virtual space, initial positions of avatars of other users are determined so that they are placed side by side in the meeting space. At this time, the initial position of the avatar may be determined so that when the virtual image is projected onto the screen 19, the avatar placed at the initial position is within the field-of-view range of a user.

As shown in Fig. 2, the first user U1 selects a placement position candidate via the input apparatus 18 so that the avatar A2 of the second user U2, the avatar A3 of the third user U3, and the avatar A4 of the fourth user U4 are placed from left to right of the screen 19 when viewed from the front.

As shown in Fig. 3, the second user U2 selects a placement position candidate via the input apparatus 18 so that the avatar A1 of the first user U1, the avatar A3 of the third user U3, and the avatar A4 of the fourth user U4 are placed from left to right of the screen 19 when viewed from the front.

As shown in Fig. 4, the third user U3 selects a placement position candidate via the input apparatus 18 so that the avatar A1 of the first user U1, the avatar A2 of the second user U2, and the avatar A4 of the fourth user U4 are placed from left to right of the screen 19 when viewed from the front.

As shown in Fig. 5, the fourth user U4 selects a placement position candidate via the input apparatus 18 so that the avatar A1 of the first user U1, the avatar A2 of the second user U2, and the avatar A3 of the third user U3 are placed from left to right of the screen 19 when viewed from the front.

By the above, the placement setting unit 7 sets initial positions of other users in the meeting space shown in the virtual image displayed for each space S. As described above, each user can set initial positions of other users in the meeting space as appropriate.

Next, a flow of generating a virtual image when a meeting is held using the virtual space sharing system 1 according to this embodiment will be described. Here, a description will be given of an example of a state in which the first user U1 and the second user U2 start a conversation with each other and the third user U3 and the fourth user U4 see the first user U1 and the second user U2 having the conversation with each other while a virtual image showing a meeting space in which avatars of other users are placed as described above so as to face users present in respective spaces S1, S2, S3, and S4 is projected onto the screens 19 of the respective spaces S1, S2, S3, and S4.

Information indicating the motions of the first user U1, the second user U2, the third user U3, and the fourth user U4 is input from the motion capture apparatuses 12 of the first space S1, the second space S2, the third space S3, and the fourth space S4 to the virtual space sharing system 1. By the above, the motion acquisition unit 2 acquires motions of the respective users U1, U2, U3, and U4.

At the same time, information indicating the line-of-sight directions of the first user U1, the second user U2, the third user U3, and the fourth user U4 is input from the eye tracking apparatuses 13 of the first space S1, the second space S2, the third space S3, and the fourth space S4 to the virtual space sharing system 1. By the above, the line-of-sight acquisition unit 3 acquires the line-of-sight directions of the respective users U1, U2, U3, and U4.

Further, information indicating the voices of the first user U1, the second user U2, the third user U3, and the fourth user U4 is input from microphones 14 of the first space S1, the second space S2, the third space S3, and the fourth space S4 to the virtual space sharing system 1. By the above, the voice acquisition unit 4 acquires the voices of the respective users U1, U2, U3, and U4. The voice acquisition unit 4 outputs information indicating the acquired voices of the respective users U1, U2, U3, and U4 to the output unit 10.

Then, the point of interest acquisition unit 8 acquires points of interest of the respective users U1, U2, U3, and U4 in the virtual image currently projected onto the screen 19 based on the coordinates of the first user U1, the second user U2, the third user U3, and the fourth user U4, the line-of-sight directions of the first user U1, the second user U2, the third user U3, and the fourth user U4, and the areas of the screens 19 corresponding to the respective pixels of the display units 15 of the first space S1, the second space S2, the third space S3, and the fourth space S4.

The image generation unit 9 generates a virtual image based on the set meeting space, the set avatar of a user, the set initial positions of the avatars of the other users in the meeting space, the motion of each user, and the point of interest of each user in the virtual image. Note that when a meeting space is set as a virtual space, the image generation unit 9 generates a virtual image so that avatars of other users having a conversation with each other face each other in the meeting space.

Specifically, the point of interest acquisition unit 8 acquires, as a point of interest of the first user U1, an area of the virtual image projected onto the screen 19 in the first space S1 where the avatar A2 of the second user U2 is shown. Further, the voice acquisition unit 4 acquires the voice of the first user U1.

Meanwhile, the point of interest acquisition unit 8 acquires, as a point of interest of the second user U2, an area of the virtual image projected onto the screen 19 in the second space S2 where the avatar A1 of the first user U1 is shown. Further, the voice acquisition unit 4 acquires the voice of the second user U2.

At this time, the image generation unit 9 has recognized, for example, a placement of an avatar of each user in the pixel region of the virtual image generated by the image generation unit 9 based on the set meeting space and initial positions of avatars of other users.

Thus, the image generation unit 9 can recognize that the first user U1 and the second user U2 are having a conversation with each other. Therefore, the image generation unit 9 generates a virtual image as a virtual image to be output to the display units 15 of the third space S3 and the fourth space S4 so that the avatar A1 of the first user U1 and the avatar A2 of the second user U2 face each other and have a conversation with each other in the meeting space. At this time, the image generation unit 9 can accurately recognize users having a conversation with each other by referring to the direction of the voice.

Then, the point of interest acquisition unit 8 acquires, as a point of interest of the third user U3, an area of the virtual image projected onto the screen 19 in the third space S3 where the avatar A1 of the first user U1 and the avatar A2 of the second user U2 are having a conversation with each other. Further, the voice acquisition unit 4 has not acquired the voice of the third user U3.

Meanwhile, the point of interest acquisition unit 8 acquires, as a point of interest of the fourth user U4, an area of the virtual image projected onto the screen 19 in the fourth space S4 where the avatar A1 of the first user U1 and the avatar A2 of the second user U2 are having a conversation with each other. Further, the voice acquisition unit 4 has not acquired the voice of the fourth user U4.

By the above, the image generation unit 9 can recognize that the third user U3 and the fourth user U4 have not participated in the conversation between the first user U1 and the second user U2, and that the third user U3 and the fourth user U4 are listening to the conversation between the first user U1 and the second user U2.

As a result, the image generation unit 9 generates, as a virtual image to be output to the display unit 15 of the first space S1, a first virtual image in which the avatar A2 of the second user U2, the avatar A3 of the third user U3, and the avatar A4 of the fourth user U4 operate while facing the first user U1 present in the first space S1 in accordance with the motions of the respective users U2, U3, and U4 in a state in which the avatar A2 of the second user U2, the avatar A3 of the third user U3, and the avatar A4 of the fourth user U4 are arranged side by side in the meeting space.

The image generation unit 9 generates, as a virtual image to be output to the display unit 15 of the second space S2, a second virtual image in which the avatar A1 of the first user U1, the avatar A3 of the third user U3, and the avatar A4 of the fourth user U4 operate while facing the second user U2 present in the second space S2 in accordance with the motions of the respective users U1, U3, and U4 in a state in which the avatar A1 of the first user U1, the avatar A3 of the third user U3, and the avatar A4 of the fourth user U4 are arranged side by side in the meeting space.

The image generation unit 9 generates, as a virtual image to be output to the display unit 15 of the third space S3, a third virtual image in which the avatar A1 of the first user U1, the avatar A2 of the second user U2, and the avatar A4 of the fourth user U4 operate in accordance with the motions of the respective users U1, U2, and U4 so that the avatar A1 of the first user U1 and the avatar A2 of the second user U2 face each other and have a conversation with each other and the avatar A4 of the fourth user U4 sees the avatar A1 of the first user U1 and the avatar A2 of the second user U2 having a conversation with each other in a state in which the avatar A1 of the first user U1, the avatar A2 of the second user U2, and the avatar A4 of the fourth user U4 are arranged side by side in the meeting space.

The image generation unit 9 generates, as a virtual image to be output to the display unit 15 of the fourth space S4, a fourth virtual image in which the avatar A1 of the first user U1, the avatar A2 of the second user U2, and the avatar A3 of the third user U3 operate in accordance with the motions of the respective users U1, U2, and U3 so that the avatar A1 of the first user U1 and the avatar A2 of the second user U2 face each other and have a conversation with each other and the avatar A3 of the third user U3 sees the avatar A1 of the first user U1 and the avatar A2 of the second user U2 having a conversation with each other in a state in which the avatar A1 of the first user U1, the avatar A2 of the second user U2, and the avatar A3 of the third user U3 are arranged side by side in the meeting space.

Note that when the third user U3 or the fourth user U4 does not see the avatar A1 of the first user U1 and the avatar S2 of the second user U2 having a conversation with each other, the image generation unit 9 generates a virtual image in which the third user U3 or the fourth user U4 sees other parts of the virtual space based on the points of interest of the third user U3 and the fourth user U4 and the directions of the faces of these users.

The image generation unit 9 outputs information indicating the first to the fourth virtual images generated as described above to the output unit 10. The output unit 10 outputs information indicating the first virtual image to the display unit 15 of the first space S1, and also outputs information indicating the voices of the other users U2, U3, and U4 to the speaker 16 of the first space S1. Further, the output unit 10 outputs information indicating the second virtual image to the display unit 15 of the second space S2, and also outputs information indicating the voices of the other users U1, U3, and U4 to the speaker 16 of the second space S2.

Further, the output unit 10 outputs information indicating the third virtual image to the display unit 15 of the third space S3, and also outputs information indicating the voices of the other users U1, U2 and U4 to the speaker 16 of the third space S3. Further, the output unit 10 outputs information indicating the fourth virtual image to the display unit 15 of the fourth space S4, and also outputs information indicating the voices of the other users U1, U2, and U3 to the speaker 16 of the fourth space S4.

Then, in a state in which the display units 15 of the respective spaces S1, S2, S3, and S4 project the input virtual images onto the screen 19, the speaker 16 outputs the voices of the other users, and each of the users U1, U2, U3, and U4 moves or speaks to the projected virtual images, whereby the image generation unit 9 generates virtual images continuously output to the other users as a moving image.

As described above, by the virtual space sharing system 1 and the virtual space sharing method according to this embodiment, it is possible to output a virtual image according to the motions of users between the users in a two-way direction. Therefore, the virtual space sharing system 1 and the virtual space sharing method according to this embodiment can be used to facilitate good communication between users.

Further, when a meeting space is selected as a virtual space, a virtual image is generated so that avatars of other users than the user in the space S are placed side by side in the meeting space regardless of the position of the user in the space S. Therefore the avatars of the other users can be easily, visually recognized and communication with the other users is facilitated. In addition, since the virtual image is generated so that the avatars of the users having a conversation with each other in the meeting space face each other, it is possible to give a sense of realism to the meeting space.

### <Second Embodiment>

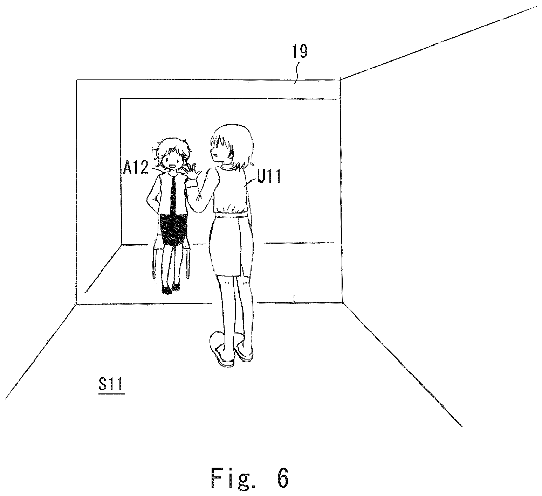

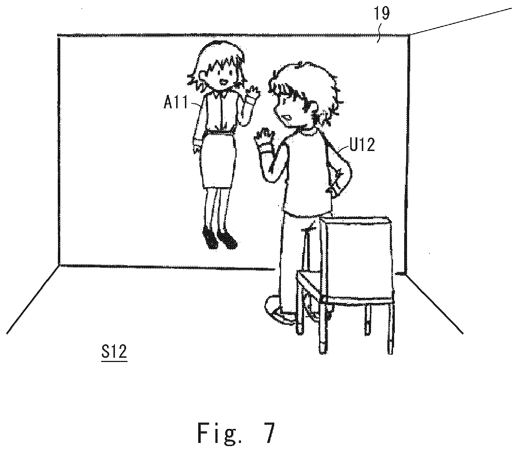

When a meeting is held with other users, the image generation unit 9 may generate a virtual image so that an avatar of another user who has a conversation with a user present in the space is placed in front of the user. Fig. 6 is a diagram showing a state of the first space when a meeting is held using the virtual space sharing system according to this embodiment. Fig. 7 is a diagram showing a state of the second space when a meeting is held using the virtual space sharing system according to this embodiment.

In this embodiment, an example of a case will be described in which a first user U11 present in a first space S11 and a second user U12 present in a second space S12 hold a meeting. At this time, it is assumed that a dress-up character has been selected as an avatar A11 of the first user U11 and a dress-up character has been selected as a second avatar A12 of the second user U12.

In the above state, when the first user U11 present in the first space S11 speaks to the avatar A12 of the second user U12 projected onto the screen 19 of the first space S11, the image generation unit 9 generates a virtual image in which the avatar A12 of the second user U12 is placed substantially in front of the first user U11 in the meeting space as shown in Fig. 6.

Further, when the second user U12 present in the second space S12 speaks to the avatar A11 of the first user U11 projected onto the screen 19 of the second space S12, the image generation unit 9 generates a virtual image in which the avatar A11 of the first user U11 is placed substantially in front of the second user U12 in the meeting space as shown in Fig. 7.

By the above, it is possible to have a smooth conversation with another user. Note that when there are a plurality of other users participating in the meeting, avatars of the other users who are not having a conversation may be placed so as to avoid avatars of the other users who are having a conversation.

### <Third Embodiment>

In the first embodiment, a meeting space is selected as a virtual space. However, the virtual space sharing system 1 according to the first embodiment can also be used in a case in which a presentation space is selected as a virtual space.

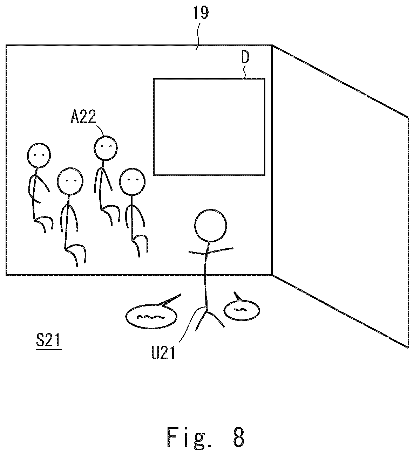

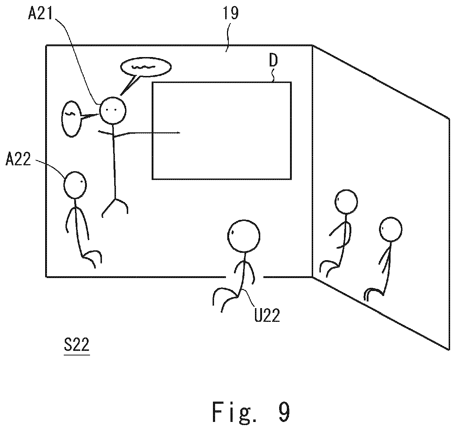

Fig. 8 is a diagram showing a space in which a user who makes a presentation is present when the presentation is made using a virtual space sharing system according to this embodiment. Fig. 9 is a diagram showing a space in which a user who listens to a presentation by using the virtual space sharing system according to this embodiment is present.

A flow in which a user selects a presentation space as a virtual space and makes a presentation will be described below. In this embodiment, an example of a case in which a user U21 makes a presentation to a plurality of users U22 using a material D will be described.

First, a flow in which a user sets a presentation space and initial positions of avatars of other users will be described. Note that a flow in which each user selects an avatar is the same as that in the first embodiment, and thus the description thereof will be omitted.

The input apparatuses 18 owned by the respective users U21 and U22 are connected to the virtual space sharing system 1, and information indicating virtual space candidates is acquired by the input apparatuses 18. Then each of users U21 and U22 selects a presentation space from among a plurality of virtual space candidates via the input apparatus 18. At this time, the user U21 can select, via the input apparatus 18, a presentation space and also can input that the user U21 himself/herself is a host for making a presentation.

By the above, the space setting unit 5 sets a virtual space for a presentation space and sets the user U21 as a user who makes a presentation. However, for example, a representative user or another person may set the presentation space and set users who attend the presentation, so that the users U21 and U22 can share the presentation space even when the respective users U21 and U22 do not set the presentation space.

Next, the input apparatuses 18 owned by the respective users U21 and U22 are connected to the virtual space sharing system 1, and information indicating placement position candidates of avatars of other users in the presentation space is acquired.

For example, in a case in which a presentation space is set as a virtual space, in the presentation space shown in the virtual image projected onto the screen 19 of a space S21 where the user U21 who makes a presentation is present, the upper right area of the screen 19 when viewed from the front is determined to be an area into which the material D for the presentation is to be incorporated. For example, the user U21 can select a file of the material D via the input apparatus 18, to thereby incorporate the material D into the area in which the material D is to be incorporated.

Further, in the presentation space, initial positions of avatars A22 of the other users U22 are determined so that the avatars A22 of the other users U22 are placed on the left side of the screen 19 when viewed from the front so as to be seated facing the user U21 present in the space S21.

Therefore, the user U21 selects, via the input apparatus 18, placement position candidates in which the avatars A22 of the respective other users U22 are to be seated for the respective seats as shown in Fig. 8. At this time, placement position candidates in which the avatars A22 of the other users U22 important to the presentation are to be seated in the front row seats can be selected.

Note that the avatars A22 of the other users U22 may be placed so that they do not interfere with the material D. Further, the initial positions of the avatars A22 of the other users U22 may be determined so that the avatars A22 placed at the respective initial positions are within the field-of-view range of the user U21 when a virtual image is projected onto the screen 19.

On the other hand, in the presentation space shown in the virtual image projected onto the screen 19 of a space S22 where the user U22 who listens to a presentation is present, an approximately center of the presentation space is determined to be an area in which the material D and an avatar A21 of the other user U21 are to be placed.

Further, in the presentation space, the initial positions of the avatars A22 of the other users U22 are determined so that the avatars A22 of the other users U22 are placed so as to avoid the material D and the avatar A21 of the other user U21 and to sit on the seats while facing the material D.

Therefore, the users U22 present in the space S22 select respective placement position candidates via the respective input apparatuses 18 so that the avatars A22 of the other users U22 are seated in respective seats as shown in Fig. 9. At this time, the avatar A21 of the other user U21 is placed so as to face the inside of the space S22 as if the avatar A21 of the other user U21 is making a presentation next to the material D to the users U22 present in the space S22.

By the above, the placement setting unit 7 sets the initial positions of the other users U21 and U22 in the presentation space shown in the virtual image projected onto each space S22. At this time, since the user U21 is set as a user who makes a presentation as described above, the placement setting unit 7 can set the avatar A21 of the user U21 so that it is placed in the aforementioned area.

Next, a flow of generating a virtual image when the user U21 makes a presentation to the user U22 by using a presentation space will be described. Here, as an example, a description will be given of a situation in which the user U21 makes a presentation to the avatar A22 of the other user U22 while pointing at the material D in the projected virtual image in a state in which a virtual image in which the material D and the avatar A22 of the other user U22 are placed as described above in the presentation space is projected onto the screen 19 of the space S21 where the user U21 is present, and the user U22 faces the avatar A21 of the other user U21 and the material D in the projected virtual image and listens to the presentation in a state in which a virtual image in which the avatars A21 and A22 of the other users U21 and U22 are placed in the presentation space as described above is projected onto the screen 19 of the space S22 where the user U22 is present.

In the above state, information indicating the motions of the users U21 and U22 is input from the motion capture apparatuses 12 of the spaces S21 and S22 to the virtual space sharing system 1. By the above, the motion acquisition unit 2 acquires the motions of the users U21 and U22.

Specifically, the motion acquisition unit 2 acquires a motion of the user U21 who makes a presentation to the avatar A22 of the other user U22 while pointing at the material D in the virtual image projected onto the screen 19 of the space S21.

Further, the motion acquisition unit 2 acquires a motion of the user U22 who is present in the space S22 and listens to the presentation while facing the avatar A21 of the other user U21 by referring to the material D in the virtual image projected onto the screen 19 of the space S22.

At the same time, information indicating the line-of-sight directions of the users U21 and U22 is input from the eye tracking apparatuses 13 of the spaces S21 and S22 to the virtual space sharing system 1. By the above, the line-of-sight acquisition unit 3 acquires the line-of-sight directions of the users U21 and U22.

Specifically, the line-of-sight acquisition unit 3 acquires a line-of-sight direction of the user U21 who makes a presentation to the avatar A22 of the other user U22 by referring to the material D in the virtual image projected onto the screen 19 of the space S21.

Further, the line-of-sight acquisition unit 3 acquires a line-of-sight direction of the user U22 who is present in the space S22 and listens to the presentation while facing the avatar A21 of the other user U21 by referring to the material D in the virtual image projected onto the screen 19 of the space S22.

Further, information indicating the voices of the users U21 and U22 is input from microphones 14 of the spaces S21 and S22 to the virtual space sharing system 1. By the above, the voice acquisition unit 4 acquires the voices of the users U21 and U22.

Specifically, the voice acquisition unit 4 acquires a voice of the user U21 who makes a presentation in the space S21. Further, the voice acquisition unit 4 listens to the presentation in the space S22 and acquires a voice of the user U22 who asks a question or the like to the user U21 as appropriate.

Then, the point of interest acquisition unit 8 acquires points of interest of the users U21 and U22 in the virtual image currently projected onto the screen 19 based on the coordinates of the users U21 and U22, the line-of-sight directions of the users U21 and U22, and the areas of the screens 19 corresponding to the respective pixels of the display units 15 of the spaces S21 and S22.

Specifically, the point of interest acquisition unit 8 acquires, as points of interest of the user U21, an area of the virtual image projected onto the screen 19 in the space S21 where the avatar A22 of the other user U22 is shown and an area of the same where the material D is shown.

Further, the point of interest acquisition unit 8 acquires, as points of interest of the user U22 present in the space S22, an area of the virtual image projected onto the screen 19 in the space S22 where the avatar A21 of the other user U21 is shown and an area of the same where the material D is shown.

The image generation unit 9 generates a virtual image based on the set presentation space, the set avatar of a user, the set initial positions of the avatars of the other users in the presentation space, the motion of each user, and the point of interest of each user in the virtual image.

Specifically, as shown in Fig. 8, the image generation unit 9 generates, as a virtual image to be output to the display unit 15 of the space S21, a first virtual image into which the material D is incorporated in the upper right of the presentation space and in which the avatar A22 of the other user U22 is seated on the left side seat of the presentation space while facing the user U21 in the space S21 and operates in accordance with the motion of the other user U22.

Further, as shown in Fig. 9, the image generation unit 9 generates a second virtual image as a virtual image to be output to the display unit 15 of the space S22. In the second virtual image, the material D is incorporated in the approximately center of the presentation space, the avatar A21 of the other user U21 operates in accordance with the motion of the other user U21 so that the avatar A21 of the other user U21 makes a presentation next to the material D to the user U22 present in the space S22 while pointing at the material D, and the avatar A22 of the other user U22 avoids the material D and the avatar A21 of the other user U21 in the presentation space, is seated while facing the material D, and operates in accordance with the motion of the other user U22.

At this time, for example, the image generation unit 9 may generate the second virtual image so that the position of the finger at which the user U21 points at the material D in the space S21 corresponds to the position of the finger at which the avatar A21 of the user U21 points at the material D in the second virtual image.

Then the image generation unit 9 may generate the virtual image, for example, so that the pages of the material D are turned to the previous page or the next page or the material D is zoomed in or out in accordance with the movement (e.g., up and down movement) of the hand of the user U21 or the like in the area onto which the material D is projected.

Further, the image generation unit 9 may generate the second virtual image, for example, so that the position of the user U21 with respect to the material D in the space S21 corresponds to the position of the avatar A21 of the user U21 with respect to the material D in the presentation space.

The image generation unit 9 outputs information indicating the first and the second virtual images generated as described above to the output unit 10. The output unit 10 outputs information indicating the first virtual image to the display unit 15 of the space S21, and also outputs information indicating the voice of the other user U22 to the speaker 16 of the space S21. Further, the output unit 10 outputs information indicating the second virtual image to the display unit 15 of the space S22, and also outputs information indicating the voices of the other users U21 and U22 to the speaker 16 of the space S22.

Then, in a state in which the display units 15 of the spaces S21 and S22 project the virtual images onto the screen 19, the speaker 16 outputs the voices of other users, and the users U21 and U22 move or speak to the projected virtual images, whereby the image generation unit 9 generates virtual images output to other users as a moving image.

Note that, in the case in which the user U22 approaches the material D in the space S22 and makes an additional explanation or question next to the material D, when a period of time set in advance for the user U22 has elapsed within a range set in advance for the material D, the image generation unit 9 may generate a virtual image so that the position of the avatar A21 of the user U21 and the position of the avatar A22 of the user U22 are exchanged in the presentation space.

Further, when one of the users U21 and U22 determines that it is preferable to hold a meeting during the presentation, one of the users U21 and U22 may be able to change the virtual space into a meeting space during the presentation via the input apparatus 18.

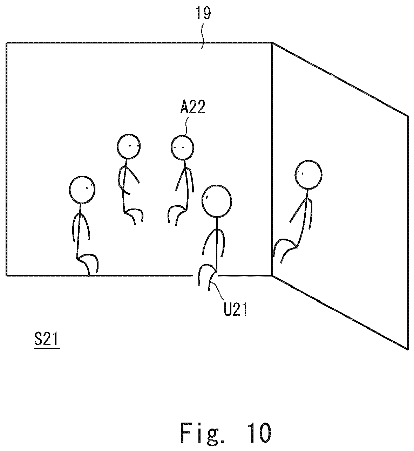

Fig. 10 is a diagram showing a state of a space when a virtual space is changed to a meeting space during a presentation. When the virtual space is changed to the meeting space, the image generation unit 9 generates, as in the case of the first embodiment, a virtual image in which other users are placed side by side in the meeting space as shown in Fig. 10.

At this time, when the presentation space is changed to the meeting space, the image generation unit 9 may generate a virtual image in which avatars of the other users are placed in the meeting space so as to surround a user present in the space. Note that when the presentation space is changed to the meeting space, a virtual image may be generated in which the avatars of the other users are placed so as to be seated on the seats in the meeting space.

When the presentation space is selected as the virtual space as described above, a virtual image is generated in which the avatar A22 of the other user U22 is placed so that the user U22 present in the space S22 can easily see the material D and the avatar A21 of the other user U21 in the presentation space regardless of the positions of the users U21 and U22 in the spaces S21 and S22. Therefore the user U22 present in the space S22 can easily listen to the presentation.

In addition, since the virtual image is generated so that the avatar A21 of the user U21 who is making a presentation in the presentation space is placed so as to face the user U22 present in the space S22 next to the material D, it is possible to give a sense of realism to the presentation space.

### <Fourth Embodiment>

In the first embodiment, a meeting space is selected as a virtual space. However, the virtual space sharing system 1 according to the first embodiment can also be used in a case in which a lesson space is selected as a virtual space.

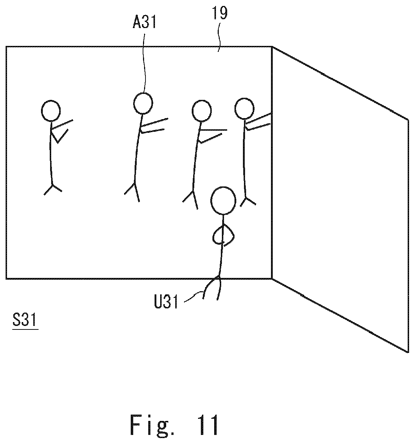

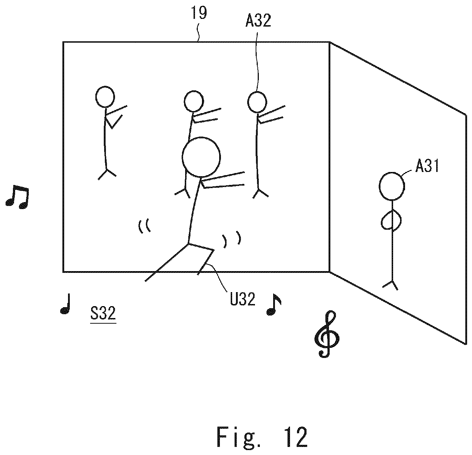

In this embodiment, an example of a case in which a dance lesson is performed by a teacher and students by using a common lesson space will be described. Fig. 11 is a diagram showing a state of a space where a teacher is present when a dance lesson is performed using a virtual space sharing system according to this embodiment. Fig. 12 is a diagram showing a state of a space where students are present when a dance lesson is performed using the virtual space sharing system according to this embodiment.

When a lesson space is selected as a virtual space, the image generation unit 9 generates, for example, as a virtual image to be output to the display unit 15 of a space S31 in which a teacher U31 is present, a first virtual image in which avatars A32 of students U32 operate in accordance with the motions of the students U32 in a state where the avatars A32 of the respective students U32 are placed side by side in the lesson space as shown in Fig. 11. At this time, in regard to the placement of the avatar A32 of the student U32, as in the case of the first embodiment, the teacher U31 can set a predetermined initial position via the input apparatus 18.

Further, as a virtual image to be output to the display unit 15 of a space S32 in which the student U32 is present, the image generation unit 9 generates a second virtual image in which avatars A32 of other students U32 and an avatar A31 of the teacher U31 operate in accordance with the motions of the other students U32 and the teacher U31 in a state where the avatars A32 of the other students U32 and the avatar A31 of the teacher U31 are placed side by side in the lesson space as shown in Fig. 12. At this time, in regard to the placement of the avatar A32 of the other student U32 and the avatar A31 of the teacher U31, as in the case of the first embodiment, the student U32 present in the space S32 can set predetermined initial positions via the input apparatus 18.

Note that, in this embodiment, although a virtual image in which the avatar A31 of the teacher U31 and the avatar A32 of the student U32 are placed side by side in the lesson space is generated, the placement of the avatar A31 of the teacher U31 and the avatar A32 of the student U32 may be determined as appropriate in accordance with the contents of a lesson.

### <Fifth Embodiment>

In the first embodiment, a meeting space is selected as a virtual space. However, the virtual space sharing system 1 according to the first embodiment can also be used in a case in which an office space is selected as a virtual space.

Note that the office space is, for example, a three-dimensional space in which an office of an actual company is reproduced, and a plurality of desks arranged in the three-dimensional space are determined as placement position candidates of avatars of users. Further, when each user selects a placement position candidate via his/her input apparatus 18, the placement setting unit 7 sets a desk in the office space selected by the user as an initial position of the avatar of this user.

The image generation unit 9 generates a virtual image in which an avatar corresponds to a motion of a user; that is, when the user is seated, the avatar of the user is seated on the desk in the office space, and when the user has moved relative to the screen 19, the avatar of the user moves from the desk in the office space. Then the image generation unit 9 generates the virtual image within a preset field-of-view range in a field-of-view direction of the avatar of each user in the office space.

A flow of generating a virtual image when a user shares an office space will be described below. Here, an example of a state will be described in which a third user present in a third space is looking at a situation in which a first user present in a first space approaches and speaks to an avatar of a second user and then the second user present in the second space approaches and speaks to the avatar of the first user.

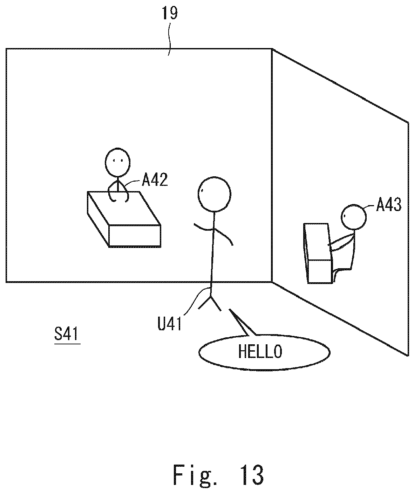

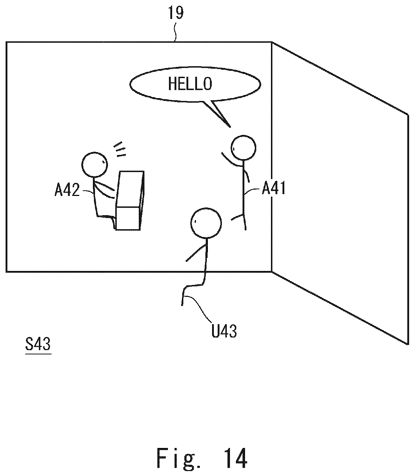

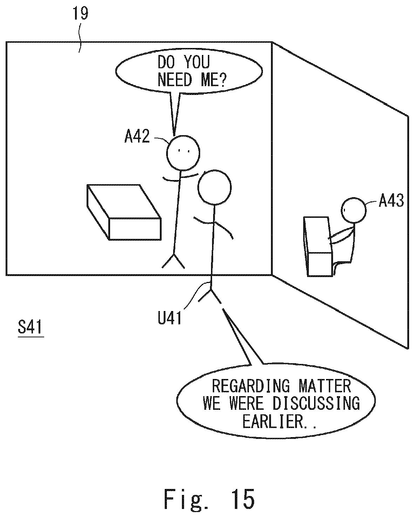

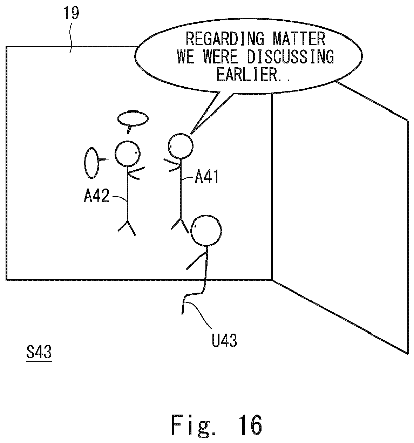

Fig. 13 is a diagram showing a state of a space where the first user is present when the first user approaches the second user and then speaks to the second user. Fig. 14 is a diagram showing a state of a space where the third user is present when the first user approaches the second user and then speaks to the second user. Fig. 15 is a diagram showing a state of a space where the first user is present when the second user approaches the first user who has spoken to the second user and then speaks to the first user. Fig. 16 is a diagram showing a state of a space where the third user is present when the second user approaches the first user who has spoken to the second user and then speaks to the first user.

First, as shown in Fig. 13, it is assumed that a virtual image in which an avatar A42 of a second user U42 and an avatar A43 of a third user U43 are placed in the initial positions and seated on the desks in a field-of-view direction of an avatar A41 of a first user U41 in an office space is projected onto the screen 19 of a first space S41.

In the above state, as shown in Fig. 13, when the first user U41 approaches and speaks to the avatar A42 of the second user U42 in the virtual image projected onto the screen 19 of the first space S41, the image generation unit 9 generates, as a virtual image to be output to the display unit 15 of a second space S42, a virtual image in which the avatar A41 of the first user U41 approaches and speaks to the second user U42 present in the second space S42 in the field-of-view range of the avatar A42 of the second user U42 in the office space based on the motions of the respective users U41, U42, and U43 acquired by the motion acquisition unit 2. At this time, when the avatar A43 of the third user U43 is present in the field-of-view range of the avatar A42 of the second user U42, the avatar A43 of the third user U43 is also included in the virtual image.

Further, the image generation unit 9 generates, as a virtual image to be output to the display unit 15 of a third space S43, a virtual image in which the avatar A41 of the first user U41 approaches and speaks to the avatar A42 of the second user U42 seated on the desk in the office space based on the motions of the respective users U41, U42, and U43 acquired by the motion acquisition unit 2 as shown in Fig. 14.

Further, when the second user U42 approaches and then speaks to the avatar A41 of the first user U41 in the virtual image projected onto the screen 19 of the second space S42, the image generation unit 9 generates, as a virtual image to be output to the display unit 15 of the first space S41, a virtual image in which the avatar A42 of the second user U42 approaches and speaks to the first user U41 present in the first space S41 in the field-of-view range of the avatar A41 of the first user U41 in the office space based on the motions of the respective users U41, U42, and U43 acquired by the motion acquisition unit 2 as shown in Fig. 15. At this time, when the avatar A43 of the third user U43 is present in the field-of-view range of the avatar A41 of the first user U41, the avatar A43 of the third user U43 is also included in the virtual image.

Further, the image generation unit 9 generates, as a virtual image to be output to the display unit 15 of the third space S43, a virtual image in which the avatar A41 of the first user U41 and the avatar A42 of the second user U42 have a conversation in a state in which they are close to each other in the office space based on the motions of the respective users U41, U42, and U43 acquired by the motion acquisition unit 2 as shown in Fig. 16.

As described above, in this embodiment, since the virtual image in which avatars operate in accordance with the motions of respective users within the field-of-view range of the avatar of the user in the office space is generated, it is possible to provide a virtual office with a sense of realism.

Note that the operation may be able to be performed via the input apparatus 18 so that a conversation between the first user U41 and the second user U42 is not heard by the third user U43. By means of the above, it is possible to have a conversation which it is desired that a third party in the office space not hear.

Further, the volume of the conversation between the first user U41 and the second user U42 output in the third space S43 may be adjusted based on a distance between the avatar A41 of the first user U41 and the avatar A42 of the second user U42 relative to the avatar A43 of the third user U43 in the office space.

Further, for example, the microphone 14 may be able to be muted via the input apparatus 18 when it is desired that other users not hear the sound in the space. Further, for example, the volume of a conversation between other users may be able to be adjusted via the input apparatus 18.

### <Other Embodiments>

Although the present disclosure has been described as a hardware configuration in the above first to fifth embodiments, the present disclosure is not limited thereto. In the present disclosure, processing of each component can also be implemented by causing a Central Processing Unit (CPU) to execute a computer program.

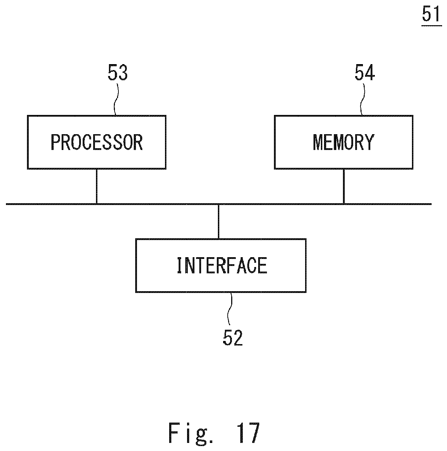

For example, the virtual space sharing system 1 according to the above-described embodiments can include the following hardware configuration. Fig. 17 is a diagram showing an example of the hardware configuration included in the virtual space sharing system 1.

An apparatus 51 shown in Fig. 17 includes an interface 52, a processor 53, and a memory 54. The virtual space sharing system 1 described in the above embodiments is implemented by the processor 53 loading and executing a program stored in the memory 54. That is, this program is a program for causing the processor 53 to function as the virtual space sharing system 1 according to the above-described embodiments.

The above-described program can be stored and provided to a computer (a computer including an information notification apparatus) using any type of non-transitory computer readable media. Non-transitory computer readable media include any type of tangible storage media. Examples of non-transitory computer readable media include magnetic storage media (such as floppy disks, magnetic tapes, hard disk drives, etc.), and optical magnetic storage media (e.g., magneto-optical disks). This examples further include CD-ROM (Read Only Memory), CD-R, and CD-R/W. This examples further include semiconductor memories (such as mask ROM, PROM, EPROM, flash ROM, RAM, etc.). Further, the program may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

The present disclosure is not limited to the above-described embodiments and may be changed as appropriate without departing from the spirit of the present disclosure.

For example, a plurality of speakers 16 may be disposed in a space, and a voice of a user may be output from the speakers 16 based on the direction of the voice uttered by the user. That is, when an avatar of another user speaks to a user present in the space, the speaker 16 may be disposed and controlled so that the voice of the other user is output from the side of the screen 19 to the user present in the space. Further, when other users face each other and have a conversation in a virtual space, the speaker 16 may be disposed and controlled so that the voices of the other users are output in the direction in which the avatars of the other users utters voices. That is, the direction of the face of the avatar of the user and the direction in which the voice of the user is output in the space may be made substantially the same. By the above, it is possible to provide a virtual office with a sense of realism.

Further, the voice acquisition unit 4 may acquire a sound in the space via the microphone 14 and output the sound from the speaker 16 based on the direction of the sound in the space. By the above, it is possible to provide a live space with a sense of realism.

For example, in accordance with the selected virtual space, the image generation unit 9 may not reflect some motions of a user on motions of the avatar of the user in the virtual space. For example, during the presentation in the third embodiment, a virtual image showing a state in which the avatar A22 of the user U22 is seated may be generated regardless of whether the user U22 stands up or sits down. By the above, the user U22 present in the space S22 can concentrate on the presentation. Note that, by inputting motions which it is not desired to be reflected from the outside via the input apparatus, some of the motions of the user may be set so that they are not reflected on the motions of the avatar of the user in the virtual space.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A virtual space sharing system (1) comprising:
a motion acquisition unit (2) configured to acquire a motion of a user present in each of a plurality of spaces (S);
an image generation unit (9) configured to generate a virtual image in which avatars corresponding to the respective users operate in a virtual space shared in the plurality of spaces (S) based on the motions of the respective users; and
an output unit (10) configured to output a virtual image in which avatars of other users operate in the virtual space to a display unit (15) disposed in each of the plurality of spaces (S).

2. The virtual space sharing system (1) according to Claim 1, further comprising a space setting unit (5) configured to set the virtual space based on a space request input from outside,
wherein initial positions where the avatars of the other users are placed in the virtual space are determined in accordance with the virtual space.

3. The virtual space sharing system (1) according to Claim 2, further comprising a placement setting unit (7) configured to set placement of the avatars of the other users for the respective initial positions determined in the virtual space based on a placement request of the avatar input from the outside.

4. The virtual space sharing system (1) according to any one of Claims 1 to 3, further comprising:
a line-of-sight acquisition unit (3) configured to acquire a line-of-sight direction of the user; and
a point of interest acquisition unit (8) configured to acquire a point of interest of the user in the virtual image based on the line-of-sight direction of the user,
wherein the image generation unit (9) generates the virtual image based on the point of interest of the user in the virtual image.

5. The virtual space sharing system (1) according to any one of Claims 1 to 4, further comprising a voice acquisition unit (4) configured to acquire a voice of the user,
wherein when the virtual space is a presentation space, the image generation unit generates (9) the virtual image so that an avatar (A21) of a user (U21) who makes a presentation by using a material (D) incorporated in the presentation space and the material (D) do not interfere with the avatars (A22) of the other users (U22) and that the user (U21) who makes the presentation and the material (D) are displayed in a size larger than those of the avatars (A22) of the other users (U22).

6. The virtual space sharing system (1) according to any one of Claims 1 to 4, further comprising a voice acquisition unit (4) configured to acquire a voice of the user,
wherein when the virtual space is a meeting space, the image generation unit (9) generates the virtual image so that the avatars of the other users are placed side by side in the meeting space.

7. The virtual space sharing system (1) according to Claim 6, further comprising:
a line-of-sight acquisition unit (3) configured to acquire a line-of-sight direction of the user; and
a point of interest acquisition unit (8) configured to acquire a point of interest of the user in the virtual image based on the line-of-sight direction of the user,
wherein the image generation unit (9) generates the virtual image based on the point of interest of the user in the virtual image so that the avatars of the other users having a conversation with each other face each other in the meeting space.

8. The virtual space sharing system (1) according to Claim 4, wherein the image generation unit (9) generates the virtual image within a preset field-of-view range in a field-of-view direction of the avatar of the user in the virtual space.

9. A virtual space sharing method comprising:
acquiring in time series a motion of a user present in each of a plurality of spaces;
generating a virtual image in which avatars corresponding to the respective users operate in a virtual space shared in the plurality of spaces based on the time-series motions of the respective users; and
outputting a virtual image in which avatars of other users operate in the virtual space to a display unit disposed in each of the plurality of spaces.

10. A virtual space sharing program for causing a computer to:
acquire in time series a motion of a user present in each of a plurality of spaces;
generate a virtual image in which avatars corresponding to the respective users operate in a virtual space shared in the plurality of spaces based on the time-series motions of the respective users; and
output a virtual image in which avatars of other users operate in the virtual space to a display unit disposed in each of the plurality of spaces.
